# EUROPÄISCHE PATENTANMELDUNG

(11) **EP 3 982 478 A2**
(43) Veröffentlichungstag der Anmeldung: **13.04.2022**
(21) Anmeldenummer: 21200704.1
(22) Anmeldetag: 04.10.2021
(51) Int. Cl.: H01M 50/579, H01M 50/574, H01M 10/42, H01M 10/48, H01M 10/44

(54) **VERFAHREN ZUM BETREIBEN EINES BATTERIESYSTEMS UND BATTERIESYSTEM**

(30) Priorität: 12.10.2020 DE 102020212837
(71) Anmelder: Robert Bosch GmbH, 70442 Stuttgart (DE)
(72) Erfinder: Salziger, Jan, 71679 Asperg (DE)

(57) **Zusammenfassung**

Die Erfindung betrifft ein Verfahren zum Betreiben eines Batteriesystems (10). Dabei umfasst das Batteriesystem (10) mehrere miteinander verschaltete Batterien (12), die jeweils mindestens eine Batteriezelle (16) und ein Batteriemanagementsystem (18) zur Überwachung und Steuerung der Batterie (12) aufweisen, wobei die einzelnen Batterien (12) aus dem Batteriesystem (10) entnehmbar sind. Das Verfahren umfasst nachfolgende Verfahrensschritte:
- Erkennung einer Bewegung einer Batterie (12) in eine Entnahmerichtung (24);
- Abschalten der Batterie (12).

## Beschreibung

Die Erfindung betrifft ein Verfahren zum Betreiben eines Batteriesystems. Dabei umfasst das Batteriesystem mehrere miteinander verschaltete Batterien, die jeweils mindestens eine Batteriezelle und ein Batteriemanagementsystem zur Überwachung und Steuerung der Batterie aufweisen, wobei die einzelnen Batterien aus dem Batteriesystem entnehmbar sind. Das Verfahren umfasst nachfolgende Verfahrensschritte:
- Erkennung einer Bewegung einer Batterie in eine Entnahmerichtung;
- Abschalten der Batterie.

Die Erfindung betrifft ferner ein Batteriesystem, das eingerichtet ist, das erfindungsgemäß vorgeschlagene Verfahren durchzuführen.

Die Erfindung betrifft auch ein Fahrzeug, das eingerichtet ist, das erfindungsgemäß vorgeschlagene Verfahren durchzuführen, und/oder das das erfindungsgemäß vorgeschlagene Batteriesystem umfasst.

### Stand der Technik

In der Elektromobilität, für Industrieanwendungen und zum Speichern von Energie werden Batteriesysteme verwendet. Diese Batteriesysteme werden vorzugsweise in handhabbaren Einheiten hergestellt, transportiert und verbaut.

Ab einer bestimmten Größe sind Energiespeicher nicht mehr transportabel, auch bei Elektrofahrzeugen wird ein Batteriesystem aus mehreren Batterien aufgebaut. Diese Batterien beinhalten üblicherweise mehrere seriell und parallel miteinander verschaltete Batteriezellen.

Heutzutage werden Batteriesysteme mit wechselbaren Batterien (Swappable Battery). vermehrt verwendet. Häufig weist ein solches Batteriesystem ein eingebautes Stecksystem auf. Das Einsetzen der Batterie zum Betrieb oder zum Laden in das Batteriesystem stellt damit gleichzeitig die elektrische Verbindung her.

Wechselbare Batterien benötigen Kontakte, die eine ausreichende Tragfähigkeit für den Nennstrom haben. Ist eine Wechselbarkeit gefordert, dann muss der Kontakt auch in der Lage sein, den Strom zu trennen. Das bedeutet, dass nicht nur die Stromtragfähigkeit, sondern auch die Unterbrechfähigkeit eines Kontaktes entscheidend ist. Diese Eigenschaft wird als Hot-Plug-/Hot-Unplug-Fähigkeit bezeichnet.

Hot-Plug-/Hot-Unplug-fähige Kontakte, insbesondere Hochstromkontakte sind deutlich aufwändiger und deutlich teurer. Zudem sind bei Kontakten nach Stand der Technik nur bis zu einer maximalen Anzahl von Hot-Plug-/Hot-Unplug-Zyklen zulässig.

### Offenbarung der Erfindung

Es wird ein Verfahren zum Betreiben eines Batteriesystems vorgeschlagen. Dabei umfasst das Batteriesystem mehrere miteinander verschaltete Batterien, die jeweils mindestens eine Batteriezelle und ein Batteriemanagementsystem zur Überwachung und Steuerung der Batterie aufweisen.

Dabei sind die Batterien unabhängig voneinander zu- und abschaltbar. Vorzugsweise sind die Batterien parallel miteinander verschaltet. Aufbau der Batteriesysteme aus mehreren parallelschaltbaren Einzelbatterien bietet die Vorteile, wie beispielsweise eine Skalierbarkeit für unterschiedliche Anwendungen innerhalb einer Systemklasse. Die einzelnen Batterien können aufgrund einer Bedarfsänderung, wie beispielsweise einer Reichweitenerhöhung oder einer Vergrößerung der Speicherfähigkeit eingesetzt werden. Ein solches Batteriesystem kann auch bei Wechselsystemen, bei denen die Batterien rollierend geladen werden, während das Batteriesystem dauerhaft betreibbar ist, eingesetzt werden. Die alten oder defekten Batterien können schnell austauscht werden. Darüber hinaus werden im autonomen Fahren automatisch wechselbare Batterien die Stillstandzeit von Fahrzeugen reduzieren.

Die einzelnen Batterien sind dabei aus dem Batteriesystem entnehmbar. Dabei können die Batterien jeweils mittels einer Verbindungseinrichtung mit dem Batteriesystem elektrisch verbunden sein. Die Verbindungseinrichtung kann beispielsweise als ein Stecksystem ausgebildet sein. Beispielsweise kann das Batteriesystem eine Halterung zur Aufnahme der Batterien aufweisen. Dabei kann der Stecker in die jeweilige Batterie eingebaut sein, während in der Halterung ein Gegenstecker eingebaut ist.

Vorzugsweise befindet sich die Verbindungseinrichtung bzw. das Stecksystem in Unterteil des Batteriesystems bzw. der einzelnen Batterien. Vorteilhaft ist hierbei, dass das Positionieren der Batterie in seine vorgesehene Position im Einbauort durch einschieben in einen Schacht o.Ä. erfolgt. Hierbei gleitet die Batterie in eine Halterung an ihre endgültige Position. In der Endlage angekommen, wird auf dem letzten Teil des Weges der elektrische Kontakt hergestellt. Hierbei werden der die Endposition und der elektrische Kontakt gleichzeitig hergestellt. Vorteilhafterweise ist diese Verbindungseinrichtung bzw. dieses Stecksystem mechanisch ausgleichend gelagert. Hierdurch wird erreicht, dass eine Positionstoleranz der Batterie und der Führung nicht auf eine fehlerhafte Position des Steckers durchschlägt. Dies kann durch Verschiebbarkeit des Steckers im Gehäuse von z. B. einigen Millimetern erreicht werden.

Auch kann das elektrische Stecksystem selbst durch Formgebung so aufgebaut sein, dass er z. B. Toleranzen in einer Richtung toleriert. Vorteilhaft ist hierbei ein Stecksystem aus einem messerförmigen Stecker.

In einer weiteren Ausgestaltung ist der Stecker federnd gelagert, hierbei wirkt zuerst die Beschleunigung auf das Batteriesystem, aufgrund des Masse-Federsystems verbleibt der Stecker zunächst an seiner Position. Erst nachdem das Batteriesystem einen definierten Weg zurückgelegt hat, wird durch die Federkraft auch das Stecksystem bewegt.

Erfindungsgemäß wird zunächst eine Bewegung einer Batterie in eine Entnahmerichtung erkannt. Dabei können die Batterien jeweils eine Bewegungserkennungseinrichtung aufweisen.

Nachdem die Bewegung der Batterie in der Entnahmerichtung erkannt wurde, wird die Batterie abgeschaltet. Dadurch kann ein sogenanntes "Hot-Unplugging" und folglich ein Lichtbogen vermieden werden und die Batterie kann daher sicherer aus dem Batteriesystem entnommen werden.

Vorteilhaft werden Signale der Erkennung einer Bewegung der Batterie in eine Entnahmerichtung zunächst an das Batteriemanagementsystem übermittelt werden, das eine Schalteinrichtung zum Abschalten der Batterie steuert. Dabei wird das Batteriemanagementsystem die Bewegung der Batterie in Echtzeit überwacht. Sobald eine Bewegung der Batterie in der Entnahmerichtung erkannt wird, steuert das Batteriemanagementsystem die Schalteinrichtung, welche dann die Batterie abschaltet.

Vorteilhaft können Signale der Erkennung einer Bewegung der Batterie in eine Entnahmerichtung auch direkt an eine Schalteinrichtung übermittelt werden, die die Batterie dann direkt gemäß den Signalen abschaltet. Dabei kann das Batteriemanagementsystem beispielsweise eine elektrische Verbindung zwischen einer Bewegungserkennungseinrichtung und der Schalteinrichtung etablieren. Eine Bewegung der Batterie in der Entnahmerichtung führt zu einem Abschalten der Batterie ohne weitere Verzögerung.

Vorzugsweise ist das Batteriesystem in einem Fahrzeug angeordnet. Dabei erfolgt das Abschalten der Batterie nur dann, wenn die Geschwindigkeit des Fahrzeugs in einem vorgegebenen Zeitraum einen vorgegebenen Geschwindigkeitsschwellenwert unterschreitet. In diesem Fall wird das Fahrzeug als stehend erkannt.

In einer weiteren Ausgestaltung kann über die zusätzlichen Achsen des Beschleunigungssensors, wenn ein dreidimensionaler Beschleunigungssensor vorhanden ist, ein Fahrprofil erkannt werden, indem Längs- und Querbeschleunigung gemessen werden. Liegt dann ein Szenario vor, in dem häufige Längs- und Querbeschleunigung vorhanden sind, kann das Fahrzeug als "Fahrt" erkannt werden.

Das Abschalten der Batterie kann in bestimmten Betriebsbereichen erfolgen. Somit wird eine unbeabsichtigte Auslösung des Abschaltens der Batterie, wie beispielsweise bei Vibrationen des Fahrzeuges, vermieden. Vorteilhaft erfolgt das Abschalten der Batterie nur dann, wenn beispielsweise die Geschwindigkeit des Fahrzeugs für z. B. 3 Sekunden kleiner als 3 km/h ist, denn nur bei stehendem Fahrzeug kann die Batterie entnommen werden.

Vorzugsweise erfolgt das Abschalten der Batterie nur dann, wenn die Batterie entnommen wird und ein Strom der Batterie einen vorgegebenen Stromschwellenwert überschreitet. Beispielsweise ist eine Vermeidung von Lichtbögen nur bei hohen Strömen notwendig, in dem Fall, dass die Batterie entnommen wird.

In einer weiteren Ausgestaltung wird eine Entnahme der Batterie erkannt, und der aktuelle Strom ist in einem geringen Bereich, wie beispielsweise 5A als Ruhestromaufnahme des Fahrzeugs im Stand, dann muss kein sofortiges Abschalten eingeleitet werden. In diesem Fall kann auf ein elektrisches Trennen verzichtet werden, da keine Gefahr der Schädigung der Kontakte besteht. Hierdurch wird das Batteriesystem robuster gegenüber fehlerhaftem Erkennen einer Batterieentnahme. Dadurch wird eine weitere Robustheit erzeugt.

Softwaretechnisch kann ein Betriebsmodus "Abschalten bei Entnahme" im Batteriemanagementsystem implementiert werden, in dem die Batterie abgeschaltet wird, bevor sie aus dem Batteriesystem entnommen wird. Beispielsweise wird dieser Betriebsmodus nur dann aktiviert, wenn die Geschwindigkeit des Fahrzeugs in dem vorgegebenen Zeitraum den vorgegebenen Geschwindigkeitsschwellenwert unterschreitet und wenn der Strom der Batterie den Stromschwellenwert überschreitet.

In einer weiteren Ausgestaltung kann auch bei stehendem Fahrzeug und hoher Stromentnahme der Betriebsmodus "Abschalten bei Entnahme" aktiviert werden. Dies ist der Fall, wenn auch bei Stillstand des Fahrzeugs hohe Ströme z. B. durch hohe Nebenverbraucher zu erwarten sind.

Vorzugsweise wird eine Meldung, dass die Batterie entnommen wird, von dem Batteriemanagementsystem abgesendet, sobald ein Beginn der Entnahme der Batterie erkannt wird. Diese Meldung kann beispielsweise an eine dem Batteriemanagementsystem übergeordnete Steuereinheit, wie beispielsweise eine Fahrzeugsteuereinheit (Vehicle Control Unit, VCU), abgesendet werden. Beispielsweise können Kommunikationsleitungen von der Batterie zum Fahrzeug in der Verbindungseinrichtung verbaut. Wird die Batterie entnommen, so kann das Batteriemanagementsystem der Fahrzeugsteuereinheit vor physikalischer Trennung der Kommunikationsleitung eine Meldung geben, dass die Batterie getrennt wird. Dadurch kann die Fahrzeugsteuereinheit bereits vor Trennung der Kommunikationsleitung reagieren. Liegt eine solche Information vor, dass eine Entnahme der Batterie erkannt wurde, dann ist eine Fehlerhafte Kommunikation auf Entnahme zurückführen. Auf diese Art können inkorrekte Fehlerspeichereinträge vermieden werden.

Es wird auch ein Batteriesystem vorgeschlagen, das eingerichtet ist, das erfindungsgemäß vorgeschlagene Verfahren durchzuführen. Dabei umfasst das Batteriesystem mehrere miteinander verschaltete Batterien, die jeweils mindestens eine Batteriezelle, ein Batteriemanagementsystem zur Überwachung und Steuerung der Batterie und eine Bewegungserkennungseinrichtung aufweisen. Dabei sind die Batterien jeweils mittels einer Schalteinrichtung zu- und abschaltbar. Dabei sind die Batterien jeweils mittels einer Verbindungseinrichtung mit dem Batteriesystem elektrisch verbunden. Dabei sind die einzelnen Batterien aus dem Batteriesystem entnehmbar.

Vorzugsweise umfasst die Bewegungserkennungseinrichtung einen dreidimensionalen Beschleunigungssensor zur Erkennung einer Bewegung einer Batterie. Die Verwendung eines dreidimensionalen Beschleunigungssensors ist vorteilhaft, da hierdurch die Richtung, in der eine Entnahme erfolgt, genau erkannt werden kann. Andere Beschleunigungsrichtungen können ausgeschlossen werden.

Es ist aber auch denkbar, dass die Bewegungserkennungseinrichtung einen eindimensionalen Beschleunigungssensor zur Erkennung einer Bewegung einer Batterie in eine Entnahmerichtung umfasst.

Die im Rahmen des erfindungsgemäß vorgeschlagenen Verfahrens beschriebenen Merkmale gelten auch für das erfindungsgemäß vorgeschlagene Batteriesystem. Umgekehrt gelten die im Rahmen des erfindungsgemäß vorgeschlagenen Batteriesystems beschriebenen Merkmale auch für das erfindungsgemäß vorgeschlagene Verfahren.

Es wird auch ein Fahrzeug vorgeschlagen, das eingerichtet ist, das erfindungsgemäß vorgeschlagene Verfahren durchzuführen und/oder das das erfindungsgemäß vorgeschlagene Batteriesystem umfasst.

### Vorteile der Erfindung

Mit dem erfindungsgemäß vorgeschlagenen Verfahren kann auf die Verwendung von Hot-Plug-fähigen Verbindungseinrichtungen bzw. Kontakten verzichtet werden. Damit werden Kosten des Batteriesystems verringert werden.

Des Weiteren kann mit dem erfindungsgemäß vorgeschlagenen Verfahren die Batterie beim hohen Strom abgeschaltet werden, bevor sie aus dem Batteriesystem entnommen wird. Somit werden die Kontakte bzw. die Verbindungseinrichtungen vor Lichtbögen geschützt und die Batterien können damit ohne Lichtbögen aus dem Batteriesystem entnommen werden. Dadurch kann Überhitzung oder Brand an den Kontakten aufgrund von zu starker Alterung auch vermieden werden.

Darüber hinaus können mit dem erfindungsgemäß vorgeschlagenen Verfahren Ausfälle aufgrund von Verschleiß der Kontakte der Verbindungseinrichtung vermieden werden.

Ferner kann das Batteriesystem bzw. die Batterie mit dem erfindungsgemäß vorgeschlagenen Verfahren einfacher ausgelegt werden. Dadurch kann Bauraum bei der Verbindungseinrichtung reduziert werden, was ebenfalls für eine Kostenersparnis von Bedeutung ist.

Mit dem erfindungsgemäß vorgeschlagenen Verfahren können weiterhin Lichtbögen in Explosion-geschützten Bereichen vermieden werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Batteriesystems, das eingerichtet ist das erfindungsgemäß vorgeschlagene Verfahren durchzuführen, und
- Figur 2: eine schematische Darstellung eines Verfahrensablaufs.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

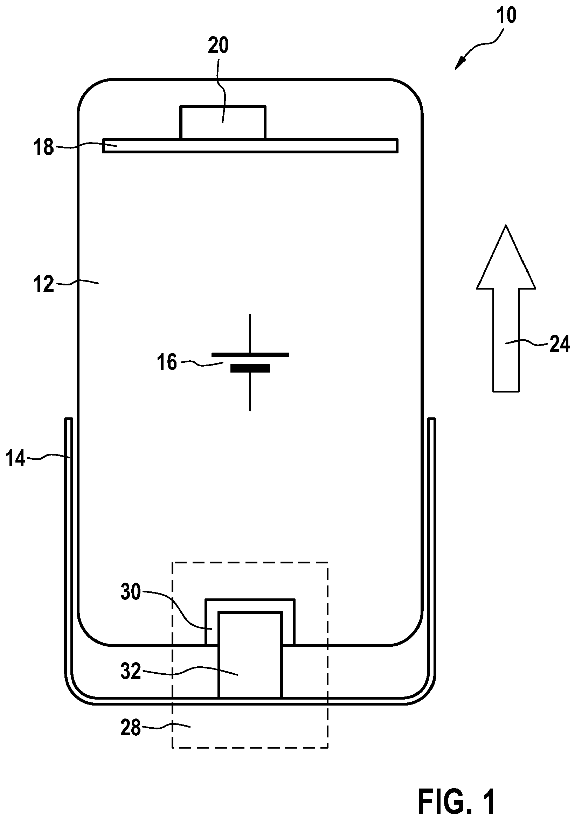

Figur 1 zeigt eine schematische Darstellung eines Batteriesystems 10, das eingerichtet ist, das erfindungsgemäß vorgeschlagene Verfahren durchzuführen.

Dabei umfasst das Batteriesystem 10 mehrere miteinander verschaltete Batterien 12 und eine Halterung 14 zur Aufnahme der Batterien 12. Vorliegend in Figur 1 ist nur eine Batterie 12 dargestellt. Die Batterien 12 weisen jeweils mindestens eine Batteriezelle 16 und ein Batteriemanagementsystem 18 zur Überwachung und Steuerung der Batterie 12 auf.

Die Batterien 12 sind jeweils mittels einer Schalteinrichtung (nicht dargestellt) unabhängig voneinander zu- und abschaltbar. Vorzugsweise sind die Batterien 12 parallel miteinander verschaltet.

Die einzelnen Batterien 12 sind dabei aus dem Batteriesystem 10 entnehmbar. Dabei sind die Batterien 12 jeweils mittels einer Verbindungseinrichtung 28 mit dem Batteriesystem 10 elektrisch verbunden. Die Verbindungseinrichtung 28 ist dabei als ein Stecksystem, das einen Stecker 30 und einen Gegenstecker 32 aufweist, ausgebildet. Der Stecker 30 ist dabei in die jeweilige Batterie 12 eingebaut, während der Gegenstecker 32 in der Halterung 14 eingebaut ist.

Das Einsetzen einer Batterie 12 in das Batteriesystem 10 stellt damit gleichzeitig die elektrische Verbindung her. Die Verbindungseinrichtung 28 kann auch Kommunikationsleitungen aufweisen, mittels denen das Batteriemanagementsystem 18 mit einem ihm übergeordneten Steuereinheit, wie beispielsweise einer Fahrzeugsteuereinheit, kommunizieren kann.

Zur Erkennung einer Bewegung der Batterie 12 in eine Entnahmerichtung 24 weisen die Batterien 12 jeweils eine Bewegungserkennungseinrichtung 20. Vorzugsweise weist der Bewegungserkennungseinrichtung 20 einen dreidimensionalen Beschleunigungssensor auf. Alternativ kann die Bewegungserkennungseinrichtung 20 auch einen eindimensionalen Beschleunigungssensor zur Erkennung der Bewegung der Batterie 12 in der Entnahmerichtung 24 aufweisen.

Bei der Durchführung des erfindungsgemäß vorgeschlagenen Verfahrens wird zunächst eine Bewegung einer Batterie 12 in eine Entnahmerichtung 24 mittels der Bewegungserkennungseinrichtung 20 erkannt.

Nachdem die Bewegung der Batterie 12 in der Entnahmerichtung 24 erkannt wurde, wird die Batterie 12 mittels der Schalteinrichtung abgeschaltet. Dadurch kann ein sogenanntes "Hot-Unplugging" und folglich ein Lichtbogen vermieden werden und die Batterie 12 kann daher sicherer aus dem Batteriesystem 10 entnommen werden.

Signale der Erkennung einer Bewegung der Batterie 12 in eine Entnahmerichtung 24 können dabei zunächst an das Batteriemanagementsystem 18 übermittelt werden, das die Schalteinrichtung zum Abschalten der Batterie 12 steuert. Dabei wird das Batteriemanagementsystem 18 die Bewegung der Batterie 12 in Echtzeit überwacht. Sobald eine Bewegung der Batterie 12 in der Entnahmerichtung 24 erkannt wird, steuert das Batteriemanagementsystem 18 die Schalteinrichtung, welche dann die Batterie 12 abschaltet.

Signale der Erkennung einer Bewegung der Batterie 12 können aber auch direkt an die Schalteinrichtung übermittelt werden, die die Batterie 12 dann direkt gemäß den Signalen abschaltet. Dabei kann das Batteriemanagementsystem 18 beispielsweise eine elektrische Verbindung zwischen der Bewegungserkennungseinrichtung 20 und der Schalteinrichtung etablieren. Eine Bewegung der Batterie 12 in der Entnahmerichtung 24 führt zu einem Abschalten der Batterie 12 ohne weitere Verzögerung.

Das Batteriesystem 10 kann in einem Fahrzeug angeordnet. Dabei kann das Batteriesystem 10 so eingerichtet sein, dass das Abschalten der Batterie 12 nur dann erfolgt, wenn die Geschwindigkeit des Fahrzeugs in einem vorgegebenen Zeitraum einen vorgegebenen Geschwindigkeitsschwellenwert unterschreitet. Das Abschalten der Batterie 12 kann in bestimmten Betriebsbereichen erfolgen.

Somit wird eine unbeabsichtigte Auslösung des Abschaltens der Batterie 12, wie beispielsweise bei Vibrationen des Fahrzeuges, vermieden.

Das Batteriesystem 10 kann auch eingerichtet sein, dass das Abschalten der Batterie 12 nur dann erfolgt, wenn ein Strom der Batterie 12 einen vorgegebenen Stromschwellenwert überschreitet. Beispielsweise ist eine Vermeidung von Lichtbögen nur bei hohen Strömen notwendig. In diesem Fall erfolgt das Abschalten der Batterie 12, sobald der Strom der Batterie 12 bzw. der Strom über den Kontakt der Verbindungseinrichtung 28 auf einen Wert ansteigt und somit die Batterie 12 nicht mehr ohne Schaden des Kontakts der Verbindungseinrichtung 28 entnommen werden kann.

Softwaretechnisch kann ein Betriebsmodus "Abschalten bei Entnahme" im Batteriemanagementsystem 18 implementiert werden, in dem die Batterie 12 abgeschaltet wird, bevor sie aus dem Batteriesystem 10 entnommen wird. Beispielsweise wird dieser Betriebsmodus nur dann aktiviert, wenn die Geschwindigkeit des Fahrzeugs in dem vorgegebenen Zeitraum den vorgegebenen Geschwindigkeitsschwellenwert unterschreitet und wenn der Strom der Batterie 12 den Stromschwellenwert überschreitet.

Eine Meldung, dass die Batterie 12 entnommen wird, kann von dem Batteriemanagementsystem 18 abgesendet werden, sobald ein Beginn der Entnahme der Batterie 12 erkannt wird. Diese Meldung kann beispielsweise mittels der in der Verbindungseinrichtung 28 verbaute Kommunikationsleitung an eine dem Batteriemanagementsystem 18 übergeordnete Steuereinheit, wie beispielsweise eine Fahrzeugsteuereinheit, abgesendet werden. Wird die Batterie 12 entnommen, so kann das Batteriemanagementsystem 18 der Fahrzeugsteuereinheit vor physikalischer Trennung der Kommunikationsleitung eine Meldung geben, dass die Batterie 12 getrennt wird. Dadurch kann die Fahrzeugsteuereinheit bereits vor Trennung der Kommunikationsleitung reagieren. Liegt eine solche Information vor, dass eine Entnahme der Batterie 12 erkannt wurde, dann ist eine Fehlerhafte Kommunikation auf Entnahme zurückführen. Auf diese Art können inkorrekte Fehlerspeichereinträge vermieden werden.

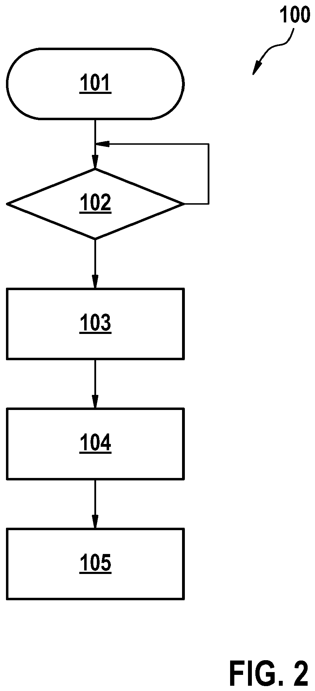

Figur 2 zeigt eine schematische Darstellung eines Verfahrensablaufs 100 zum Betreiben eines Batteriesystems 10, das in einem Fahrzeug angeordnet ist.

Mit einem Start in einem Verfahrensschritt 101 ist das Batteriesystem 10 bzw. das Fahrzeug im Betrieb.

In einem Verfahrensschritt 102 wird geprüft, ob das Fahrzeug stehend ist. Dabei wird geprüft, ob die Geschwindigkeit des Fahrzeugs in einem vorgegebenen Zeitraum einen vorgegebenen Geschwindigkeitsschwellenwert unterschreitet. Das Abschalten der Batterie 12 erfolgt nur dann, wenn die Geschwindigkeit des Fahrzeugs in einem vorgegebenen Zeitraum einen vorgegebenen Geschwindigkeitsschwellenwert unterschreitet. Somit wird eine unbeabsichtigte Auslösung des Abschaltens der Batterie 12, wie beispielsweise bei Vibrationen des Fahrzeuges, vermieden. Vorteilhaft erfolgt das Abschalten der Batterie 12 nur dann, wenn beispielsweise die Geschwindigkeit des Fahrzeugs für z. B. 3 Sekunden kleiner als 3 km/h ist, denn nur bei stehendem Fahrzeug kann die Batterie 12 entnommen werden.

Es wird in dem Verfahrensschritt 102 auch geprüft, ob ein Strom der Batterie 12 einen Stromschwellenwert überschreitet. Das Abschalten der Batterie 12 erfolgt nur dann, wenn ein Strom der Batterie 12 einen vorgegebenen Stromschwellenwert überschreitet. Beispielsweise ist eine Vermeidung von Lichtbögen nur bei hohen Strömen notwendig. In diesem Fall erfolgt das Abschalten der Batterie 12, sobald der Strom der Batterie 12 bzw. der Strom über einen Kontakt der Verbindungseinrichtung 28, auf einen Wert ansteigt und somit die Batterie 12 nicht mehr ohne Schaden des Kontakts der Verbindungseinrichtung 28 entnommen werden kann.

Der Verfahrensschritt 102 wiederholt sich, wenn die Geschwindigkeits- und/oder die Strombedingung nicht erfüllt sind.

Wenn die Geschwindigkeit des Fahrzeugs in dem vorgegebenen Zeitraum den vorgegebenen Geschwindigkeitsschwellenwert unterschreitet und/oder der Strom der Batterie 12 den Stromschwellenwert überschreitet, wird in einem Verfahrensschritt 103 ein Betriebsmodus "Abschalten bei Entnahme" aktiviert, in dem die Batterie 12 abgeschaltet wird, bevor sie aus dem Batteriesystem 10 entnommen wird.

Wenn eine Bewegung einer Batterie 12 in eine Entnahmerichtung 24 erkannt ist, wird die Batterie 12 in einem Verfahrensschritt 104 mittels der Schalteinrichtung abgeschaltet.

In einem Verfahrensschritt 105 wird die Batterie 12 dann ohne Schaden aus dem Batteriesystem 10 entnommen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betreiben eines Batteriesystems (10), das mehrere miteinander verschaltete Batterien (12) umfasst, wobei die Batterien (12) jeweils mindestens eine Batteriezelle (16) und ein Batteriemanagementsystem (18) zur Überwachung und Steuerung der Batterie (12) aufweisen, und wobei
die einzelnen Batterien (12) aus dem Batteriesystem (10) entnehmbar sind,
umfassend nachfolgende Verfahrensschritte:
- Erkennung einer Bewegung einer Batterie (12) in eine Entnahmerichtung (24);
- Abschalten der Batterie (12).

2. Verfahren nach Anspruch 1, **dadurch gekennzeichnet, dass** Signale der Erkennung einer Bewegung der Batterie (12) in eine Entnahmerichtung (24) zunächst an das Batteriemanagementsystem (18) übermittelt werden, das eine Schalteinrichtung zum Abschalten der Batterie (12) steuert.

3. Verfahren nach Anspruch 1, **dadurch gekennzeichnet, dass** Signale der Erkennung einer Bewegung der Batterie (12) direkt an eine Schalteinrichtung übermittelt werden, die die Batterie (12) direkt gemäß den Signalen abschaltet.

4. Verfahren nach einem der Ansprüche 1 bis 3, **dadurch gekennzeichnet, dass**
das Batteriesystem (10) in einem Fahrzeug angeordnet ist, und dass das Abschalten der Batterie (12) nur dann erfolgt, wenn die Geschwindigkeit des Fahrzeugs in einem vorgegebenen Zeitraum einen vorgegebenen Geschwindigkeitsschwellenwert unterschreitet.

5. Verfahren nach einem der Ansprüche 1 bis 4, **dadurch gekennzeichnet, dass**
das Abschalten der Batterie (12) nur dann erfolgt, wenn ein Strom der Batterie (12) einen vorgegebenen Stromschwellenwert überschreitet.

6. Verfahren nach einem der Ansprüche 1 bis 5, **dadurch gekennzeichnet, dass**
sobald ein Beginn der Entnahme der Batterie (12) erkannt wird,
eine Meldung, dass die Batterie (12) entnommen wird, von dem Batteriemanagementsystem (18) abgesendet wird.

7. Batteriesystem (10), das eingerichtet ist, ein Verfahren nach einem der Ansprüche 1 bis 6 durchzuführen, umfassend mehrere miteinander verschaltete Batterien (12), die jeweils mindestens eine Batteriezelle (16), ein Batteriemanagementsystem (18) zur Überwachung und Steuerung der Batterie (12) und eine Bewegungserkennungseinrichtung (20) aufweisen, wobei
die Batterien (12) jeweils mittels einer Schalteinrichtung zu- und abschaltbar sind, wobei
die Batterie (12) jeweils mittels einer Verbindungseinrichtung (28) mit dem Batteriesystem (10) verbunden sind, und wobei die einzelnen Batterien (12) aus dem Batteriesystem (10) entnehmbar sind.

8. Batteriesystem (10) nach Anspruch 7, **dadurch gekennzeichnet, dass** die Bewegungserkennungseinrichtung (20) einen dreidimensionalen Beschleunigungssensor zur Erkennung einer Bewegung einer Batterie (12) umfasst.

9. Batteriesystem (10) nach Anspruch 8, **dadurch gekennzeichnet, dass** die Bewegungserkennungseinrichtung (20) einen eindimensionalen Beschleunigungssensor zur Erkennung einer Bewegung einer Batterie (12) in eine Entnahmerichtung (24) umfasst.

10. Fahrzeug, das eingerichtet ist, ein Verfahren nach einem der Ansprüche 1 bis 6 durchzuführen und/oder das ein Batteriesystem (10) nach einem der Ansprüche 7 bis 9 umfasst.
